# EUROPEAN PATENT APPLICATION

(11) **EP 2 787 505 A2**
(43) Date of publication of application: **08.10.2014**
(21) Application number: 14163191.1
(22) Date of filing: 02.04.2014
(51) Int. Cl.: G11B 5/127, G11B 5/31

(54) **Data writer with yoke shaped write pole**

(30) Priority: 04.04.2013 US 201361808380 P; 23.05.2013 US 201313900867
(71) Applicant: Seagate Technology LLC, Cupertino CA 95014 (US)
(72) Inventor: MCCONNELL, Beverley R, Derry, Co. Derry BT47 6SQ (GB); HEIM, Kevin Richard, Eden Prairie, MN Minnesota 55347 (US); GUBBINS, Mark A, Letterkenny, Co. Donegal (IE); LAMBERTON, Robert R, Limavady, Co. Derry BT49 0QU (GB)
(74) Representative: Miller Sturt Kenyon

(57) **Abstract**

A magnetic element can be configured as a data writer with at least a write pole contacting a yoke and having an air bearing surface. The write pole may be shaped to match a paddle surface of the yoke that extends perpendicular to the air bearing surface and facing parallel to the air bearing surface.

## Description

Various embodiments of the present disclosure are generally directed to a data writer that may be utilized in a variety of data storage environments.

In a non-limiting example embodiment, a write pole can contact a yoke and have an air bearing surface with the write pole shaped to match a paddle surface of the yoke that extends perpendicular to the air bearing surface and facing parallel to the air bearing surface.
FIG. 1 is a block representation of an example portion of a data storage device.
FIGS. 2A and 2B respectively provide front and cross-sectional block representations of portions of a transducing element capable of being used in the data storage device of FIG. 1.
FIGS. 3A and 3B respectively show front and cross-sectional block representations of portions of a data reader constructed in accordance with various embodiments.
FIG. 4 displays a cross-sectional block representation of a portion of an example data reader configured in accordance with some embodiments.
FIG. 5 provides a plurality of example data readers in various stages of a fabrication process conducted in accordance with various embodiments.
FIG. 6 provides a flowchart of a data reader fabrication routine conducted in accordance with some embodiments.

Continued emphasis on greater data storage capacity and faster data access speeds has minimized the physical size of data storage components like data write poles and magnetic shields. A reduction in the physical size of data storage components can inhibit magnetic operation and correspond with unwanted magnetic flux leakage. For example, a data writer can emit flux that inadvertently erases previously written bits such that stored data is overwritten and permanently lost. Similarly, the remnant magnetic state of a reduced physical size data write pole can unintentionally undergo domain wall movement that degrades data access accuracy. Hence, there is an ongoing industry demand for data storage components with reduced form factors that can read, write, and rewrite to increased linear data bit storage environments quickly and accurately.

With such issues in mind, a data writer can be configured with at least a write pole contacting a yoke, having an air bearing surface (ABS), and shaped to match a paddle surface of the yoke that extends perpendicular to the air bearing surface and facing parallel to the air bearing surface. The increased physical size of the write pole distal the ABS can stabilize the magnetization of the write pole and hasten the magnetic saturation rise time to optimize magnetic performance in high data bit density, reduced form factor data storage devices. The matching shapes of the yoke and write pole further simplifies manufacturing time and complexity as fewer patterning and material removal steps are needed than if the write pole was a different shape than the paddle surface of the yoke.

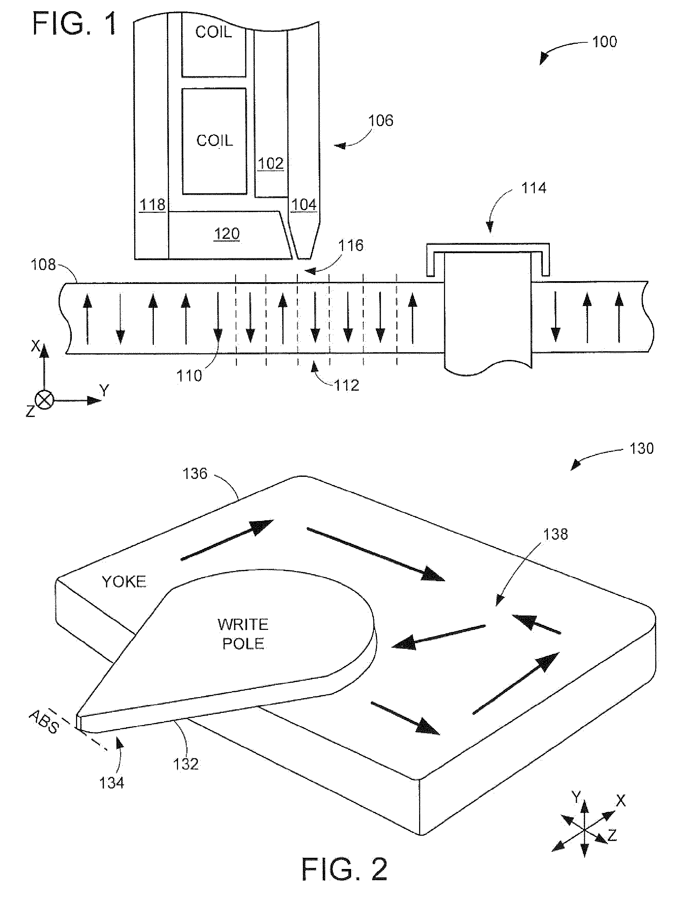

FIG. 1 provides a block representation of a portion of an example data storage device 100 that can utilize a yoke 102 and write pole 104 with matched shapes in accordance with various embodiments. The data storage device 100 is shown in a non-limiting configuration where a transducing head 106 can be positioned over a variety of locations on a magnetic storage media 108 where stored data bits 110 are located on predetermined data tracks 112. The storage media 108 can be attached to one or more spindle motors 114 that rotate during use to produce an air bearing 116 on which at least the write pole 104, return pole 118, and magnetic shield 120 of the transducing head 106 fly to program one or more data bits 110 to predetermined magnetic orientations.

While the transducing head 106 is displayed exclusively as a magnetic writer, one or more transducing elements, such as a magnetically responsive reader can concurrently be present in the transducing head 106 and communicating with the data storage media 108. Continued emphasis on minimizing the physical and magnetic size of the transducing head 106 is compounded by the increased data bit density and reduced data track 112 width of the data storage media 108 to stress the form and function of the write pole 104 and yoke 102 to accurately and quickly saturate with magnetic flux and emit that flux only to individual data bits 110 on a single data track 112.

FIG. 2 displays an isometric view of an example portion of a magnetic data writer 130 capable of being used in the transducing head 106 of FIG. 1. The data writer 130 can have one or more magnetically conductive poles that act to pass magnetic flux through an adjacent data storage media in predetermined directions. One such pole can be configured like the write pole 132 with a relatively large girth distal an ABS, along the Z axis, that tapers to a reduced width pole tip 134 to focus magnetic flux to a particular region of the adjacent data storage media.

While the write pole 132 can be configured in any number of unlimited sizes, shapes, and orientations to funnel magnetization, the write pole 132 can contact and be coupled to a yoke 136 that is adapted to provide the write pole 132 with magnetization from a write coil (not shown). The yoke 136, as shown, can be constructed to be physically larger than the write pole 132, which can aid in sufficiently supplying magnetic flux to the write pole tip 134. However, a wide yoke 136, as measured along the Z axis and compared to the write pole 132, can provide ample volume for magnetic domains to get trapped in metastable states, as generally illustrated by region 138.

The smaller physical size of the write pole 132 compared to the yoke 136 distal to the ABS, as measured along the X axis, can serve to throttle the magnetic saturation of the write pole 132 and reduce the speed at which data bits can be written. The reduced size write pole 132 further can have limited pole tip 134 taper angles that can choke the funneling of magnetic flux towards the ABS while limiting magnetic field amplitude, gradient, and direction, which may correspond to increased risk of EAW as the shape anisotropy of the write pole 134 providing an easy axis in a direction normal to the ABS. Also, the smaller shape of the write pole 134 may provide a nucleation side for magnetic domains that can move to create the metastable magnetic state of region 138. Conversely, a pole tip 134 having taper angles that are too wide can decrease the dynamic field response of the data writer 130 by generating more magnetic domain walls.

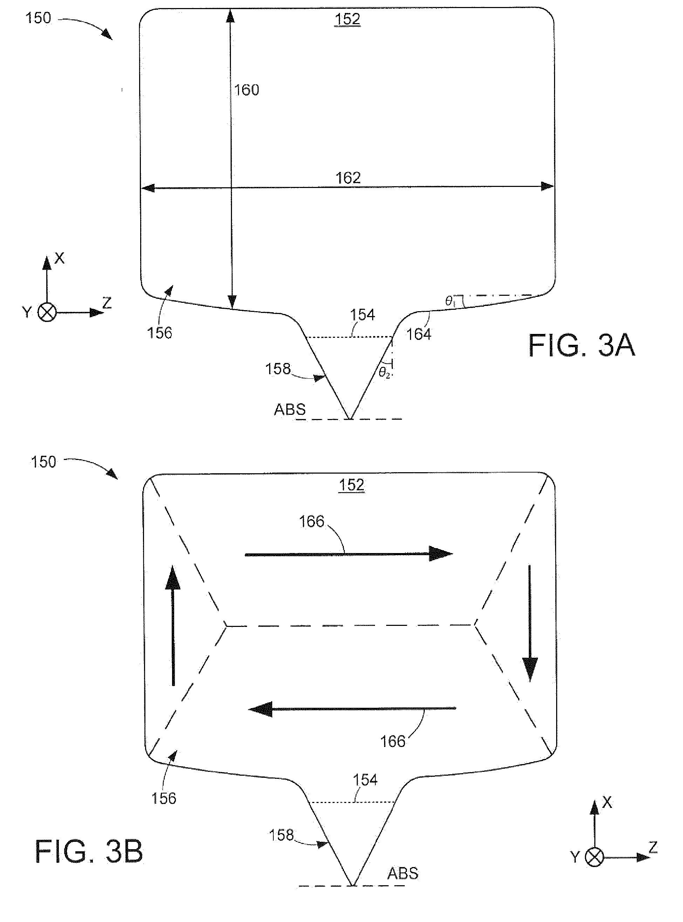

FIGS. 3A and 3B respectively provide top views of a portion of a data writer 150 constructed to optimize data writing performance by stabilizing magnetic domains and reducing the rise of inadvertent erasure conditions. As shown in FIG. 3A, a write pole 152 resides atop a yoke 154 as indicated by segmented line. The top view of FIG. 3A illustrates how the write pole 152 can be enlarged, distal the ABS, to match the shape and size of a paddle surface of the yoke 154 that defines a body region of the data writer 150. For clarity, the paddle surface 156 of the yoke 154 continuously extends from a write pole tip 158 along the X axis and a plane perpendicular with the ABS with a length 160 that is greater than the length of the write pole tip 158.

The paddle surface further extends along the Z axis parallel with the ABS to have a width 162 that is greater than the write pole tip 158. Having the paddle surface 156 face along the Y axis, parallel to the ABS, allows the write pole 152 to have a predetermined thickness, as measured along the Y axis, which may be the same or different than the thickness of the yoke 154. Various embodiments match the exterior circumference shape of the yoke 154 and write pole 152 to enhance write pole 152 performance by providing increased EAW margin and reduced magnetic saturation rise time corresponding to greater contact surface area between the pole 152 and yoke 154.

However, the increased volume of the write pole 152 compared to the pole 132 of FIG. 2 may increase erasure proximal the write pole tip 158 as greater magnetic flux may be present in the body portion of the write pole 152 that contacts the paddle surface 156. To mitigate the influence of such increased write pole material, the front surface 164 of the yoke 152, and the corresponding write pole 152, can be shaped with sidewalls tapered towards the ABS at predetermined angles *θ*₁ and *θ*₂, as shown. The predetermined taper angles can minimize the side track erasure risk associated with the increased write pole volume by recessing the paddle surface 156 from the ABS to all magnetic shields to be enlarged and positioned about the write pole tip 158.

Turning to FIG. 3B, the increased size and matching shape of the write pole 152 to the underlying yoke 154 can provide a cleaner magnetic state that corresponds with more efficient funneling of magnetic flux towards the ABS and more coherent and faster switching between magnetic polarities in the write pole 152. The magnetizations 166 of the paddle surface 156 illustrate how a stable magnetic domain loop can be formed in both the write pole 152 and yoke 154 whether the write pole 152 is programming data or not. Such stable magnetizations 166 can provide the dynamic optimization of write pole 152 operation by reducing the amount of stray magnetic fields and domain movements that can correspond with EAW and side track erasure.

As a practical example, the matching shape of the write pole 152 and yoke 154 continuously along the paddle surface 156 can provide an increase in rise time of 70-125 ps as the data writer 150 has a 550 ps rise time with 20mA write current and 400 ps rise time from 0 to peak saturation with 25mA. As such, the write pole 152 compared to the paddle surface 156 can be tuned for shape and write current to have a minimum of 70 ps faster rise time that combines with more stable magnetic domains in the write pole 152 to heighten data writing speed and accuracy.

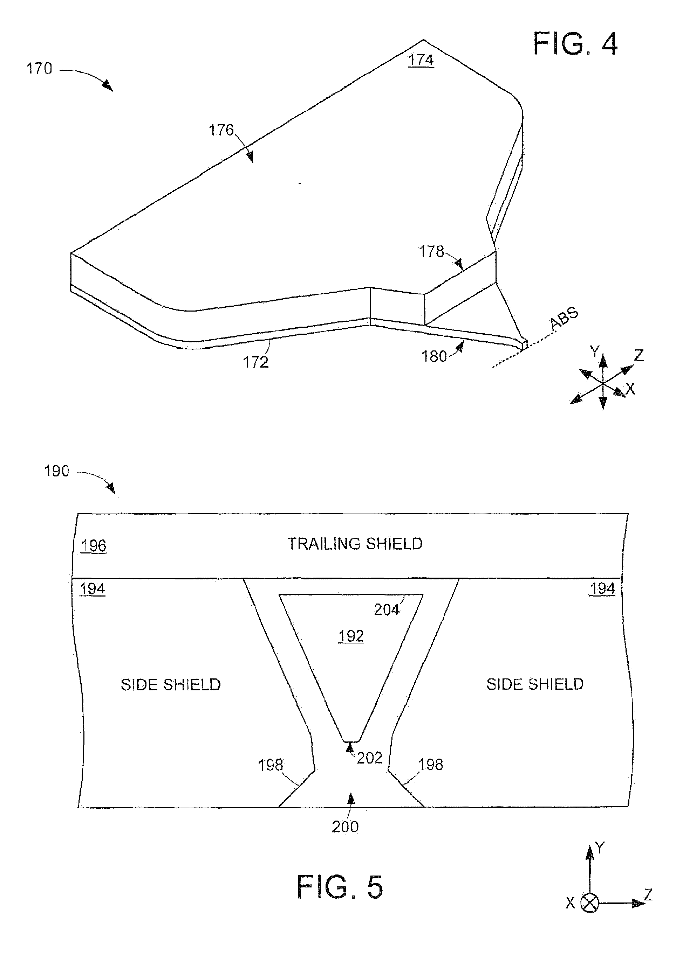

FIG. 4 provides an isometric view block representation of an example portion of a data writer 170 when the write pole 172 is positioned below the yoke 174 in accordance with some embodiments. Positioning the write pole 172 to contact a bottom paddle surface, as opposed to the top paddle surface 176, shows a throat surface 178 of the yoke 174 that extends parallel to the ABS a predetermined distance into the write pole tip 180 beyond the paddle surface 176 and body region of the yoke 174, but does not contact the ABS. The tuned separation distance between the ABS and throat surface 178 can serve to funnel magnetic flux from the yoke 174 to the write pole tip 180 at the ABS to optimize write field amplitude and gradient.

The separation of the yoke 174 from the ABS may further allow magnetic shields and non-magnetic material to surround the write pole tip 180 at the ABS to precisely define a magnetic extent for the write pole tip 180 that corresponds with a single data bit and data track across the air bearing. The position of the write pole 172 below the yoke 174 illustrates how the write pole 172 matches the exterior circumference of the paddle surface 176 despite the intricate rounded corners, tapered surfaces and increased lateral width along the Z axis. Such matched paddle surface shape can minimize the risk of metastable magnetic domains conditions as well as errant domain movement as a continuous domain loop is formed with magnetizations having sufficient strength due to the volume of magnetic material and continuous extension of the write pole 172 over the yoke 174 to maintain orientation during data writer 170 operation.

FIG. 5 displays an air bearing view block representation of a portion of an example data writer 190 configured with a matching write pole 192 and yoke (not shown) paddle surface shape. As shown, the write pole 192 is shaped as a trapezoid at the ABS, but such shape is not required and can be curvilinear, rectangular, and rhomboid shaped without limitation. The write pole 192 is positioned between lateral side shields 194 along the X axis and uptrack from a front shield 196. The shields 194 and 196 may be formed of common or dissimilar magnetically soft materials like NiFe and CoFe that maintain magnetic fields proximal the write pole 192 while keeping errant external magnetic fields from entering a predetermined magnetic extent and interfering with the operation of the write pole 192.

The write pole 192 can be tuned by adjusting the shape of the write pole 192, the non-magnetic gap distance between the write pole 192 and side shields 194, and the side shield sidewall angles to define the scope of magnetic flux transmission from the write pole 192. The side shields can be tuned, as shown, with sidewalls 198 configured to provide a throat region 200 that is proximal the write pole tip 202 and filled with non-magnetic insulating material, such as alumina, to reduce shunting of magnetic flux from the write pole 192 to the side shields 194 while allowing magnetic flux to collect and be emitted from the write pole tip 202 instead of the trailing edge 204 of the write pole 192.

It can be appreciated from the ABS view of FIG. 5 that corresponds with the view from data bits to the data writer 190 that the tuned shape of the write pole 192 to match the paddle surface of the yoke distal the ABS does not interfere with the precise shielding of the write pole 192 at the ABS. Hence, the increased magnetic material volume of the write pole 192 and stronger magnetic domains provided by the elevated surface area contact between the write pole 192 and yoke is shielded from inhibiting the magnetic operation or accuracy of the write pole 192.

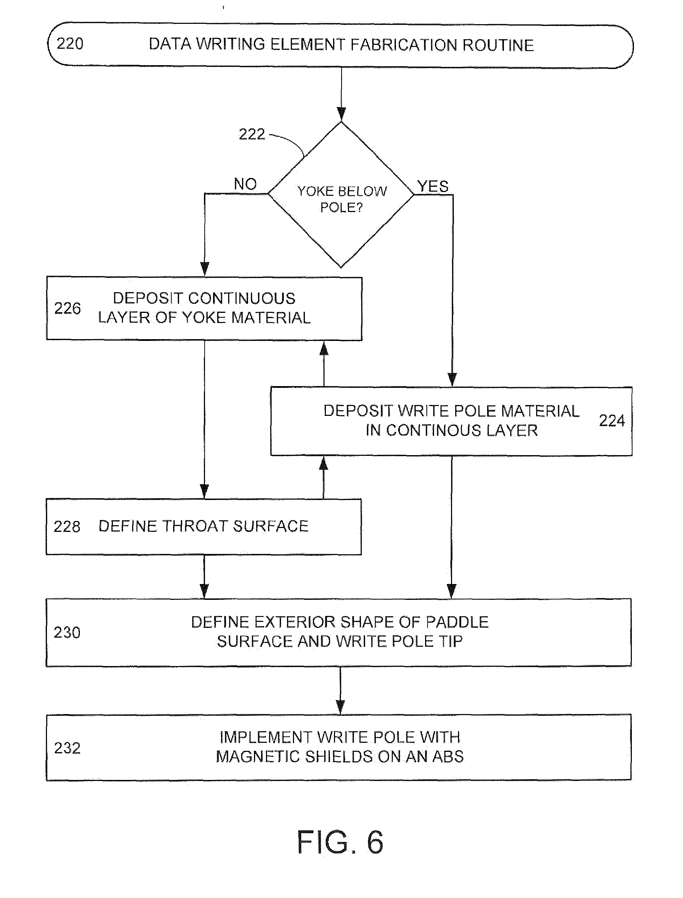

The ability to tune the write pole and yoke to a variety of different sizes, shapes, and positions relative to an ABS allows for a multitude of possible configurations that may be formed via several diverse fabrication manners, none of which are required or limited. FIG. 6 provides an example data writer fabrication routine 220 performed in accordance with various embodiments to tune a yoke and write pole. The routine 220 initially evaluates where the yoke will be relative to the write pole. If the yoke is to be above the write pole, step 224 deposits a continuous layer of write pole material.

In the event the yoke is to be below the write pole, step 226 deposits a continuous layer of yoke material. The deposition of the yoke material first proceeds to step 228 where a throat surface is defined by the patterning and removal of material proximal the ABS of the write pole before the write pole is subsequently deposited in step 224. Conversely, forming the write pole first linearly proceeds to through steps 226 and 228 to deposit the yoke atop the write pole and define the throat surface.

With the yoke and write pole material being formed, the routine 220 advances to step 230 where the exterior shape of both the paddle surface of the yoke and write pole tip are collectively patterned prior to material being removed. In some embodiments, step 230 is carried out in multiple different steps with portions of the write pole tip and paddle surface being formed individually and possibly with different processing means, such as lapping, etching, and polishing. The result of step 230 can be a write pole that has a defined write pole tip having an air bearing surface and a body region that is shaped to match the contacting paddle surface of the yoke.

Finally, step 232 implements the formed write pole with magnetic shields on the ABS, which can be configured to be similar to the data writer 190 of FIG. 6. By tuning the shape and size of the yoke and write pole, routine 220 can fabricate a data writing element with optimized magnetic saturation speed and magnetic stability. However, the routine 220 is not limited to the process shown in FIG. 7 as the various decisions and steps can be omitted, changed, and added without limitation. For example, a step may be added to incorporate the yoke and write pole into a data transducing head, such as head 106 of FIG. 1.

It can be appreciated that the configuration and material characteristics of the magnetic data writing element described in the present disclosure allows for enhanced magnetic programming by reducing the risk of unwanted magnetic domain states and movement. Moreover, the increased magnetic saturation rise time afforded by the matching shape and greater surface area contact between the yoke and write pole allows the write pole to have optimized programming speed that is complemented by the decreased risk of erasure conditions by matching the yoke and write pole shapes distal the ABS.

It is to be understood that even though numerous characteristics and advantages of various embodiments of the present disclosure have been set forth in the foregoing description, together with details of the structure and function of various embodiments, this detailed description is illustrative only, and changes may be made in detail, especially in matters of structure and arrangements of parts within the principles of the present disclosure to the full extent indicated by the broad general meaning of the terms in which the appended claims are expressed.

## Claims

1. An apparatus comprising a write pole contacting a yoke and having an air bearing surface (ABS), the write pole shaped to match a paddle surface of the yoke extending perpendicular to the ABS and facing parallel to the ABS.

2. The apparatus of claim 1, wherein the write pole extends beyond the yoke to provide the ABS.

3. The apparatus of claim 2, wherein a write pole tip portion of the write pole extends a predetermined distance beyond a throat region of the yoke.

4. The apparatus of claim 3, wherein the write pole tip has a trapezoidal shape.

5. The apparatus of claim 3, wherein the predetermined distance is filled with non-magnetic material.

6. The apparatus of claim 3, wherein the throat region continuously extends from the paddle surface towards the ABS.

7. The apparatus of claim 3, wherein the paddle surface has a front surface facing the ABS, the front surface tapered towards the ABS at a first non-normal angle.

8. The apparatus of claim 7, wherein the write pole tip tapers towards the ABS at a second non-normal angle, different than the first non-normal angle.

9. The apparatus of claim 3, wherein the paddle surface has a greater width than the write pole tip, as measured parallel with the ABS.

10. The apparatus of claim 3, wherein the paddle surface has a greater length than the write pole tip, as measured perpendicular to the ABS.

11. A data transducer comprising a magnetic flux emitter and data reader, the flux emitter comprising a write pole contacting a yoke and having an air bearing surface (ABS), the write pole shaped to match a paddle surface of the yoke extending perpendicular to the ABS and facing parallel to the ABS.

12. The data transducer of claim 11, wherein the write pole is disposed between first and second side shields on the ABS.

13. The data transducer of claim 11, wherein the write pole and yoke have at least one continuously curvilinear corner.

14. The data transducer of claim 11, wherein no part of the yoke contacts the ABS.

15. The data transducer of claim 11, wherein the yoke and write pole each have a common thickness as measured parallel to the ABS.

16. The data transducer of claim 11, wherein the yoke and write pole have dissimilar thicknesses as measured parallel to the ABS.

17. A data writer comprising a write pole contacting a yoke and having an air bearing surface (ABS), the write pole shaped and sized to match an entirety of an exterior circumference of a paddle surface of the yoke, the paddle surface extending perpendicular to the ABS and facing parallel to the ABS.

18. The data writer of claim 17, wherein the paddle surface and yoke each have a single closed magnetization loop.

19. The data writer of claim 17, wherein the write pole and yoke have continuous contact throughout the paddle surface.

20. The data writer of claim 17, wherein the paddle surface has a greater width as measured parallel to the ABS than length as measured perpendicular to the ABS.
